# EUROPÄISCHE PATENTSCHRIFT

(11) **EP 0 810 918 B1**
(45) Veröffentlichungstag und Bekanntmachung des Hinweises auf die Patenterteilung: **18.07.2001**
(21) Anmeldenummer: 96939052.5
(22) Anmeldetag: 11.11.1996
(51) Int. Cl.: B29C 33/38, C25D 5/02

(54) **VERFAHREN UND VORRICHTUNG ZUR NACH- UND/ODER AUSBESSERUNG KLEINER OBERFLÄCHENSCHÄDEN IN EINER PRESSPLATTE ODER EINEM ENDLOSBAND ZUR OBERFLÄCHENPRÄGUNG KUNSTSTOFFBESCHICHTETER HOLZWERKSTOFF- ODER LAMINATPLATTEN**
PROCESS AND DEVICE FOR RETOUCHING AND/OR REPAIRING SMALL SUPERFICIAL DAMAGES OF A PRESS PLATE OR AN ENDLESS BAND USED FOR THE IMPRESSION OF A STRUCTURE INTO THE SURFACE PORTION OF PLASTIC-COATED WOODEN OR LAMINATED BOARDS
PROCEDE ET DISPOSITIF DE REPARATION ET/OU DE RETOUCHE DE PETITS DOMMAGES SUPERFICIELS D'UN PLATEAU DE PRESSION OU D'UNE BANDE SANS FIN D'IMPRESSION DE STRUCTURE DANS LA COUCHE SUPERFICIELLE DE PANNEAUX EN BOIS OU STRATIFIES ENDUITS DE PLASTIQUE

(30) Priorität: 22.12.1995 DE 19548198
(43) Veröffentlichungstag der Anmeldung: 10.12.1997
(73) Patentinhaber: Hueck Engraving GmbH, 41747 Viersen (DE)
(72) Erfinder: LETTMANN, Heinz-Peter, D-47803 Krefeld (DE)
(74) Vertreter: Ackmann, Günther, Dr.
(86) Internationale Anmeldenummer: EP9605022
(87) Internationale Veröffentlichungsnummer: WO9723331

(56) Entgegenhaltungen:
- EP-A- 0 240 957
- US-A- 4 834 844
- DATABASE WPI Section Ch, Week 8918 Derwent Publications Ltd., London, GB; Class M11, AN 89-132767 XP002026940 & JP 01 075 695 A (KANO K) , 22.März 1989

## Beschreibung

Die Erfindung betrifft ein Verfahren und eine Vorrichtung zur Nach- und/oder Ausbesserung von kleinen Oberflächenschäden in einer großformatigen Preßplatte oder einem Endlosband aus Blech, insbesondere Stahlblech, mit einer strukturierten Metallbeschichtung und einer Hartverchromung zur Oberflächenprägung kunststoffbeschichteter Holzwerkstoff- oder Laminatplatten, wobei jede Schadstelle durch eine Maske eingerahmt, gebeizt und galvanisch metallisiert wird. Die Erfindung schließt weiterhin die Behandlung von Preßplatten oder Endlosbänder aus Stahlblech oder Messingblech ein, die unmittelbar auf ihrer Oberfläche strukturiert sind.

Kunststoffbeschichtete Holzwerkstoff- oder Laminatplatten, die beispielsweise bei der Herstellung von Möbeln verwendet werden, weisen größtenteils eine in ihrer Oberfläche eingeprägte Struktur auf. Das Einprägen einer solchen Struktur geschieht mit Hilfe von großformatigen Preßblechen oder Endlosbändern. Die Preßbleche bestehen entweder aus Stahlblech oder Messingblech mit einer Oberflächenstrukturierung oder aus einer mit Kupfer oder Messing beschichteten Stahlplatte, wobei die Oberflächenstrukturierung in die weichere Beschichtung eingearbeitet ist, die anschließend mit einer Hartverchromung versehen wird. Solche Preßbleche werden in eine Preßvorrichtung eingebaut, mit der die kunststoffbeschichteten Möbelbauplatten o. dgl. gefertigt werden. Zur kontinuierlichen Fertigung sind Pressen mit zwei umlaufenden Endlosbändern bekannt, zwischen denen das Preßgut zu Platten gepreßt wird. Bei beiden Ausführungen weisen die dem Preßgut zugewandten Flächen eine Struktur auf, die in das Preßlaminat eingeprägt wird. Da im Preßblech oder Endlosband vorhandene Oberflächenschäden mit in das Preßgut eingeprägt würden, werden für die Herstellung der Holzwerkstoff- oder Laminatplatten fehlerlose Preßplatten bzw. Endlosbänder benötigt. Es läßt sich jedoch nicht vermeiden, daß deren Oberfläche bei der Herstellung der Preßplatten bzw. Endlosbänder und während ihrer Benutzung im Preßwerk beschädigt werden und Risse, Eindrücke, Lunker u. dgl. auftreten. Oberflächenschäden dieser Art sind meist sehr klein mit einer Schadensfläche zwischen etwa 1 mm² und 14 mm². Sie können im Stahlblech, in der strukturierten Metallbeschichtung, in der Hartchromschicht oder in allen Schichten auftreten.

Eine Nachbesserung während der Bearbeitung der Preßbleche bzw. Endlosbänder sowie die Ausbesserung von im Preßwerk beschädigter Preßwerkzeuge ist sehr aufwendig und teuer oder gar nicht möglich. Handelt es sich um Schäden in den noch nicht beschichteten Stahlblechen, ist zwar gegebenenfalls eine Schadensbehebung durch ein- oder mehrmaliges Abätzen möglich, doch entstehen dabei Reparaturkosten, die etwa gleich oder höher sind, als die Beschaffungskosten neuer Preßbleche oder Endlosbänder. Durch die Hartchromschicht und die Kupfer- oder Messingschicht bis in das Stahlblech reichende Schäden lassen sich zwar ausbessern, indem die Chromschicht und die Kupfer- oder Messingschicht über die gesamte Fläche völlig abgebeizt werden und die geglättete Oberfläche neu mit Kupfer oder Messing beschichtet und verchromt wird. Doch ist auch diese Maßnahme zu aufwendig und zu teuer.

Zwar lassen sich relativ große Schadflächen ab etwa 1 cm² mit der sogenannten Tampon-Galvanisierung bearbeiten, bei der wie z.B. aus LPW Taschenbuch für Galvanotechnik, Bd. 1, 1988, S. 472 bekannt, eine Anode mit einem Tampon verbunden ist, der mit Elektrolyt getränkt wird. Der Tampon wird ständig mit frischem Elektrolyt versorgt und muß ständig intensiv bewegt werden. Kleine Schadstellenflächen zwischen etwa 1 mm² und 14 mm² lassen sich mit diesem Verfahren jedoch nicht ordnungsgemäß nach- oder ausbessern.

Aus der EP 0 240 957 ist im weiteren eine Vorrichtung zur Oberflächenbeschichtung von metallischen oder nichtmetallischen Werkstücken bekannt, welche insbesondere für die Nachbehandlung beschädigter Oberflächenschichten vorgesehen ist. Die Vorrichtung besteht aus einem glockenförmigen Behälter, der über die Schadstelle großflächig angeordnet wird und durch einen Elektrolytvorratsbehälter und den hierzu erforderlichen Verbindungsleitungen einschließlich Elektrolytpumpe mit dem Behälter verbunden ist. Senkrecht gegenüber der Schadstelle ist in dem Behälter eine kugelförmige Anode angeordnet, welche zu einer konzentrierten Beeinflussung der Schadstelle bei der mikrogalvanischen Behandlung eingesetzt wird. Die Vorrichtung und das hierzu angewendete Verfahren besitzt den Nachteil, daß nicht nur die Schadfläche, sondern auch die angrenzenden Bereiche mikrogalvanisch mitbehandelt werden. Hierdurch kann es beispielsweise zu Veränderungen in der Oberflächenstruktur, beispielsweise durch Erhebungen, führen, die unerwünscht sind.

Aufgabe der Erfindung ist daher, kleine Oberflächenschäden in den Preßblechen bzw. Endlosbändern der gattungsgemäßen Art kostengünstig derart nach- und/oder ausbessern zu können, daß die nach- und/oder ausgebesserten Schadstellen von der übrigen Oberflächenstruktur weder mit dem bloßen Auge noch mit dem Tastgefühl unterscheidbar sind.

Diese Aufgabe wird für Preßbleche oder Endlosbänder aus Stahlblech mit einer strukturierten Metallbeschichtung durch die im Kennzeichen des Anspruchs 1 angegebenen Verfahrensschritte gelöst. Für Preßbleche oder Endlosbänder aus Stahlblech mit einer unmittelbar in die Stahlblechoberfläche eingearbeiteten Struktur sind die Verfahrensschritte entsprechend dem Kennzeichen des Anspruchs 7 angepaßt..

Das erfindungsgemäße Verfahren gestattet eine sehr einfache und preiswerte lokale Nach- und/oder Ausbesserung sehr kleiner Oberflächenschäden in den Preßblechen bzw. Endlosbändern, die mit dem bekannten Tamponalgalvanisieren nicht ausbesserbar waren. Es ist ohne großen apparativen Aufwand durchführbar. Zunächst wird die Schadstelle mit einer Maske eingerahmt, die aus einem gegen die Behandlungsstoffe inerten Material besteht und beispielsweise aufgeklebt wird. Die Maske schützt die unbeschädigte Randzone der Schadstelle gegen die Beizen und galvanischen Lösungen. Durch anschließendes Beizen wird die Oberfläche der Schadstelle vorbehandelt und aufgerauht, so daß ein guter Haftgrund für die erfindungsgemäße mikrogalvanische Metallisierung gebildet wird. Das Beizen, auch Aktivierung genannt, kann chemisch und/oder mikrogalvanisch erfolgen, wobei auch eine Umpolung der Mikrogalvanisierungsvorrichtung anwendbar ist. Durch die erfindungsgemäß vorgenommene Mikrogalvanisierung ist eine lokale Nach- und/oder Ausbesserung auf äußerst kleinen Schadflächen zwischen etwa 1 mm² und 14 mm² möglich. Die zugehörige Mikrogalvanisierungsvorrichtung besteht im wesentlichen aus einem umpolbaren Gleichrichter zur Erzeugung des Galvanisierungsstromes, einer Elektrode mit einer in die Beize bzw. galvanische Lösung eintauchbaren Elektrodenspitze und einer gegenpoligen, mit dem Stahlblech zu verbindenden Anschlußklemme. Mit dem mikrogalvanischen Verfahren lassen sich alle auf einem Preßblech oder einem Endlosband vorhandenen kleineren Oberflächenschäden lokal behandeln.

Auf die durch Beizen und Spülen vorbehandelte Schadstelle wird für die mikrogalvanische Aufkupferung eine Kupferionen enthaltende galvanische Lösung, z. B. ein flüssiger oder gelförmiger Kupferhochleistungselektrolyt aufgetragen, die Elektrodenspitze in die galvanische Lösung eingetaucht bzw. mit dieser stromleitend verbunden und die gegenpolige Anschlußklemme am Stahlblech angebracht. Durch eine kathodische Schaltung wird Kupfer abgeschieden. Die Abscheidung wird, gegebenenfalls in Verbindung mit erneut zugegebener galvanischer Lösung, solange fortgesetzt, bis die Vertiefung in der Schadstelle ausgefüllt ist.

Um die Haftung der Aufkupferung zu verbessern und eine Diffusionssperrschicht zu bilden, kann die durch Beizen und Spülen vorbehandelte Schadstelle zunächst mikrogalvanisch mit einer dünnen Nickelschicht von etwa 0,5 µm versehen und anschließend aufgekupfert werden.

Durch das mikrogalvanische Verfahren lassen sich die Preßbleche und Endlosbänder in vorteilhafter Weise bei ihrer Fertigung in allen Bearbeitungszuständen nachbessern. Weist schon das rohe Stahlblech kleine Oberflächenschäden auf, lassen diese sich erfindungsgemäß aufkupfern. Nach einem Planieren der Aufkupferungen ist der Schaden behoben und das nachgebesserte Stahlblech kann in üblicher Weise ganzflächig mit einer Kupfer- oder Messingschicht versehen, strukturiert und hartverchromt werden.

Ist der Schaden bei einem bereits mit einer strukturierten Kupfer- oder Messingbeschichtung versehenen, jedoch noch nicht hartverchromten Preßblech oder Endlosband entstanden, wird die Oberfläche der Aufkupferung von Hand nachstrukturiert und der umgebenden Oberflächenstruktur angepaßt. Anschließend wird eine ganzflächige Hartverchromung vorgenommen. Werden schließlich in einem fertigen hartverchromten Preßblech oder Endlosband Oberflächenschäden bemerkt, wird die nachstrukturierte Oberfläche der Aufkupferung gebeizt und mikrogalvanisch zunächst mit einer dünnen, eine Diffusionssperre bildenden Nickelschicht und dann mit einer Kobaltschicht versehen. Der Kobaltniederschlag bildet über der nachgebesserten Schadstelle eine Härteschicht, die flach ausläuft und keine Kanten bildet.

Ebenso lassen sich auch im Preßwerk benutzte und beschädigte Preßbleche oder Endlosbänder erfindungsgemäß ausbessern. Dies geschieht ähnlich wie bei beschädigten fertigen, hartverchromten Preßblechen oder Endlosbändern, wobei die Schadstelle vor dem Aufkupfern mikrogalvanisch mit einer dünnen Nickelschicht versehen wird.

Das erfindungsgemäße Verfahren ist aber auch zur Behebung von kleinen Oberflächenschäden in einer Preßplatte oder einem Endlosband aus Stahlblech anwendbar, bei denen die Struktur unmittelbar in die Oberfläche des Stahlblechs eingearbeitet ist, also keine Kupfer- oder Messingbeschichtung vorhanden ist. In diesem Fall wird jede Schadstelle in gleicher Weise aufgekupfert und die Aufkupferung nach dem Beizen mikrogalvanisch kobaltisiert, so daß die nach- oder ausgebesserte Schadstelle eine Härteschicht besitzt.

Für die erfindungsgemäße Mikrogalvanik können übliche Beizen und galvanische Lösungen verwendet werden. Zum Beizen sind z. B. Schwefelsäure, Schwefelsäure mit Wasserstoffperoxid, Natriumhydrogenfluorid, Kaliumhydroxid o. dgl. in geeigneter wäßriger Verdünnung geeignet. Zum galvanischen Aufkupfern, Vernickeln und Kobaltisieren kommen die entsprechenden Metallionen enthaltende Lösungen in Betracht.

Die Erfindung ist in den folgenden Beispielen näher erläutert:

### Beispiel 1

Nachzubessern ist eine Preßplatte, die eine unstrukturierte Kupfer- oder Messingschicht aufweist und noch nicht hartverchromt ist.

Zunächst wird die Schadfläche mit Methanol gereinigt, anschließend eine Maske aufgeklebt, welche die Schadstelle einrahmt, wobei die Überlappung nicht mehr als 0,5 mm ringsherum betragen soll. Anschließend wird die Schadstelle mit etwa 1 bis 32 ml einer 15 %igen Lösung aus H₂SO₄ und H₂O₂ etwa 10 bis 15 Sekunden lang gebeizt. Nach dem Abtupfen der Beize wird 1 bis 3 ml eines Kupferhochleistungselektrolyten aufgebracht und eine Mikrogalvanisierungsvorrichtung angebracht, wobei die kathodisch geschaltete aus Platin/Iridium bestehende Elektrode mit ihrer Spitze in den Elektrolyten eintaucht. Bei einer Stromdichte von etwa 1 mA/mm² wächst die Kupferschicht um etwa 1,5 µm pro Minute. Ist die Vertiefung der Schadstelle mit Kupfer ausgefüllt, wird der Elektrolyt abgetupft, die Maske entfernt und die aufgekupferte Schadstelle gründlich gewaschen.

Das durch Aufkupferung nachgebesserte Preßblech wird anschließend in üblicher Weise ganzflächig strukturiert und hartverchromt.

### Beispiel 2

Nachzubessern ist eine Preßplatte mit einer strukturierten Kupfer- oder Messingschicht und einer Hartverchromung.

Die Schadfläche wird zunächst entsprechend Beispiel 1 mit einer Maske versehen. Für ein mikrogalvanisches Beizen wird eine 5 %ige Natriumhydrogenfluorid-Lösung verwendet und eine Mikrogalvanisierungsvorrichtung angebracht. Die in die Beize tauchende Elektrodenspitze wird zunächst etwa 10 bis 15 Sekunden lang anodisch und dann etwa 20 Sekunden kathodisch geschaltet, wobei die Stromdichte etwa 4 mA/mm² beträgt. Danach wird die gewaschene Schadfläche mikrogalvanisch mit einer dünnen Nickelschicht von etwa 0,5 µm versehen. Verwendet wird ein Nickel-strike-Elektrolyt. Bei einer Stromdichte von etwa 3 mA/mm² beträgt die Behandlungsdauer etwa 60 Sekunden. Anschließend wird die Schadstelle entsprechend Beispiel 1 aufgekupfert. Die Oberfläche der Aufkupferung wird nunmehr von Hand nachstrukturiert und der benachbarten Struktur angepaßt.

Schließlich wir die Oberfläche der nachstrukturierten Aufkupferung noch mit einer Härteschicht aus Kobalt versehen. Hierfür wird die Oberfläche der Aufkupferung in der vorbeschriebenen Weise galvanisch gebeizt und mit einer dünnen Nickelschicht von etwa 0,5 µm versehen. Zum mirkogalvanischen Kobaltisieren wird ein Kobalthochleistungselektrolyt aufgebracht. Bei einer Stromdichte von etwa 1 mA/mm² wächst die Kobaltschicht etwa 2 µm/Minute.

In gleicher Weise läßt sich auch eine im Preßwerk beschädigte Preßplatte ausbessern, wobei lediglich die Schadfläche vor der Aufkupferung mit einer dünnen Nickelschicht als Diffusionssperre versehen wird.

### Beispiel 3

Nachzubessern ist eine Preßplatte aus Stahlblech, bei der die Stahlblechoberfläche unmittelbar strukturiert ist.

Zunächst wird die Schadstelle entsprechend Beispiel 2 mikrogalvanisch aufgekupfert. Die Oberfläche der Aufkupferung wird sodann von Hand nachstrukturiert. Anschließend wird die Preßplatte ganzflächig hartverchromt.

### Beispiel 4

Auszubessern ist eine Preßplatte aus Stahlblech mit einer Strukturierung der Stahloberfläche und ohne Hartverchromung.

Die Schadstelle wird entsprechend Beispiel 2 aufgekupfert, und die Oberfläche der Aufkupferung wird von Hand nachstrukturiert. Danach wird die nachstrukturierte Oberfläche der Aufkupferung entsprechend Beispiel 2 mikrogalvanisch mit einer harten Kobaltschicht versehen.

Entsprechend den Beispielen lassen sich auch Endlosbänder nach oder ausbessern. Desgleichen ist das erfindungsgemäße Verfahren zur Nach- oder Ausbesserung von Preßplatten oder Endlosbänder aus anderen Metallen und Legierungen, z. B. Messing, sowie anderen Metallbeschichtungen geeignet, wobei die Beiz- und Galvanisierungsbedingungen jeweils anzupassen sind.

## Patentansprüche

1. Verfahren zur Nach- und/oder Ausbesserung von kleinen Oberflächenschäden in einer großformatigen Preßplatte oder einem Endlosband aus Blech, insbesondere Stahlblech, mit einer strukturierten Metallbeschichtung und einer Hartverchromung zur Oberflächenprägung kunststoffbeschichteter Holzwerkstoff- oder Laminatplatten, wobei jede Schadstelle durch eine Maske eingerahmt, gebeizt und galvanisch metallisiert wird und auf die eingerahmte Schadstelle eine galvanische Lösung aufgetragen und in diese eine Elektrodenspitze eingetaucht wird,
dadurch gekennzeichnet,
daß zur Mikrogalvanisierung von Schadflächen kleiner als 14 mm² die aufzusetzende Maske in der Art um die Schadstelle angeordnet wird, daß eine Überlappung von nicht mehr als 0,5 mm ringsherum vorhanden ist.

2. Verfahren nach Anspruch 1, dadurch gekennzeichnet, daß die gebeizte Schadstelle zunächst mikrogalvanisch mit einer dünnen Nickelschicht versehen und anschließend aufgekupfert wird.

3. Verfahren nach Anspruch 1 oder 2, dadurch gekennzeichnet, daß die Preßplatte bzw. das Endlosband nach dem Aufkupfern der Schadstellen ganzflächig mit einer Kupfer- oder Messingschicht versehen, strukturiert und hartverchromt wird.

4. Verfahren nach Anspruch 1 oder 2, dadurch gekennzeichnet, daß die Oberfläche der Aufkupferungen nachstrukturiert wird.

5. Verfahren nach Anspruch 4, dadurch gekennzeichnet, daß die Preßplatte bzw. das Endlosband nach dem Nachstrukturieren der Aufkupferungen ganzflächig hartverchromt wird.

6. Verfahren nach Anspruch 4, dadurch gekennzeichnet, daß die nachstrukturierte Oberfläche der Aufkupferung gebeizt und mikrogalvanisch zunächst mit einer dünnen Nickelschicht und dann mit einer Kobaltschicht versehen wird.

7. Verfahren zur Nach- und/oder Ausbesserung von kleinen Oberflächenschäden in einer großformatigen Preßplatte oder einem Endlosband aus Stahlblech mit einer strukturierten Oberfläche zur Oberflächenprägung kunststoffbeschichteter Holzwerkstoff- oder Laminatplatten, wobei jede Schadstelle durch eine Maske eingerahmt, gebeizt und mikrogalvanisch behandelt wird
dadurch gekennzeichnet,
daß eine Ausbesserung bei Schadflächen kleiner als 14 mm² vorgenommen wird und die verwendete Maske in der Art um die Schadstelle angeordnet wird, daß eine Überlappung von nicht mehr als 0,5 mm ringsherum vorhanden ist, wobei die Schadstelle mikrogalvanisch aufgekupfert, erneut gebeizt und dann mikrogalvanisch kobaltisiert wird.

8. Verfahren nach einem der Ansprüche 1 bis 7, dadurch gekennzeichnet, daß zum Beizen Schwefelsäure oder Schwefelsäure mit Wasserstoffperoxid oder Natriumhydrogenfluorid oder Kaliumhydroxid verwendet wird.

9. Verfahren nach einem der Ansprüche 1 bis 8, dadurch gekennzeichnet, daß zum galvanischen Aufkupfern, Vernickeln und Kobaltisieren die entsprechenden Metallionen enthaltende Lösungen verwendet werden.

10. Mikrogalvanisierungsvorrichtung zur Durchführüng des Verfahrens nach einem der Ansprüche 1 bis 9, gekennzeichnet durch einen umpolbaren Gleichrichter, einer Elektrode mit einer in die Beize bzw. die galvanische Lösung eintauchbaren Elektrodenspitze und einer gegenpoligen, mit dem Stahlblech zu verbindenden Anschlussklemme sowie eine Maske zur Einrahmung der Schadstelle mit einer Überlappung von 0,5 mm.

11. Mikrogalvanisierungsvorrichtung nach Anspruch 10, dadurch gekennzeichnet, daß die Elektrode aus Platin/Iridium besteht.

## Claims

1. A method of mending or repairing small surface defects in a large pressure plate or an endless sheet-metal, particularly steel, belt having a structured metal coating and electroplated with hard chromium in order to emboss the surface of plastic-coated wood-material or laminated boards, each damaged place being enclosed by a mask, etched and electroplated and an electroplating solution being applied to the enclosed damaged place and an electrode tip being immersed therein,
characterised in that
in order to micro-electroplate damaged surface areas of less than 14 mm², the mask is disposed around the damaged place so as to overlap by not more than 0.5 mm all around.

2. A method according to claim 1, characterised in that the etched damaged place is micro-electroplated with a thin layer of nickel and then copper-plated.

3. A method according to claim 1 or 2,
characterised in that after the damaged places have been copper-plated, the pressure plate or endless belt is coated with copper or brass over its entire surface, structured and hard-plated with chromium.

4. A method according to claim 1 or 2,
characterised in that the surface of the copper-plated areas is subsequently structured.

5. A method according to claim 4, characterised in that after the copper plating has been structured, the pressure plate or endless belt is hard-plated with chromium over its entire surface.

6. A method according to claim 4, characterised in that the subsequently-structured surface of the copper plating is etched and micro-electroplated with a thin nickel layer and then with a cobalt layer.

7. A method of mending or repairing small surface defects in a large pressure plate or an endless sheet-steel belt having a structured surface for embossing the surfaces of plastic-coated wood-material or laminated boards, each damaged place being enclosed by a mask, etched and micro-electroplated,
characterised in that
damaged areas smaller than 14 mm² are repaired and the mask is disposed around the damaged place so as to overlap by not more than 0.5 mm all round, the damaged place being micro-electroplated with copper, etched a second time and then micro-electroplated with cobalt.

8. A method according to any of claims 1 to 7,
characterised in that sulphuric acid with or without hydrogen peroxide or sodium hydrogen fluoride or potassium hydroxide is used for etching.

9. A method according to any of claims 1 to 9,
characterised in that solutions containing the appropriate metal ions are used for electroplating with copper, nickel and cobalt.

10. A micro-electroplating device for working the method according to any of claims 1 to 9,
characterised by a reversible-polarity rectifier, an electrode, an electrode tip for immersion in the etching or electroplating solution, a connecting terminal at the opposite polarity for connecting to the steel plate, and a mask for enclosing the damaged place and overlapping by 0.5 mm.

11. A micro-electroplating device according to claim 10, characterised in that the electrode is of platinum/iridium.

## Revendications

1. Procédé pour retoucher et/ou réparer de petits dommages superficiels dans une plaque d'impression de grand format ou dans une bande sans fin en tôle, notamment en tôle d'acier, ayant un revêtement métallique structuré et un chromage dur pour l'estampage en surface de matériau en bois revêtu de matière plastique ou de plaques stratifiées, chaque point endommagé étant encadré par un masque, étant décapé et étant métallisé par voie galvanique, et une solution galvanique étant déposée sur le point endommagé encadré et une point d'électrode étant plongée dans cette solution,
caractérisé
en ce que pour la microgalvanisation de surfaces endommagées inférieures à 14 mm² le masque à placer est disposé autour du point endommagé, de façon à ce qu'il y ait tout autour un chevauchement de pas plus de 0,5 mm.

2. Procédé suivant la revendication 1, caractérisé en ce que le point décapé est d'abord muni par voie microgalvanique d'une mince couche de nickel et est ensuite cuivré.

3. Procédé suivant la revendication 1 ou 2, caractérisé en ce que la plaque d'impression ou la bande sans fin est munie, après le cuivrage des points endommagés, sur toute la surface d'une couche de cuivre ou d'une couche de laiton, est structurée et est soumise à un chromage dur.

4. Procédé suivant la revendication 1 ou 2, caractérisé en ce que la surface des cuivrages est post-structurée.

5. Procédé suivant la revendication 4, caractérisé en ce que la plaque d'impression ou la bande sans fin reçoit sur toute sa surface un chromage dur après la post-structuration des cuivrages.

6. Procédé suivant la revendication 4, caractérisé en ce que la surface post-structurée du cuivrage est décapée et est munie par voie microgalvanique d'abord d'une mince couche de nickel et ensuite d'une couche de cobalt.

7. Procédé pour retoucher et/ou réparer de petits dommages superficiels dans une plaque d'impression de grand format ou dans une bande sans fin en tôle, notamment en tôle d'acier, ayant un revêtement métallique structuré et un chromage dur pour l'estampage en surface de matériau en bois revêtu de matière plastique ou de plaques stratifiées, chaque point endommagé étant encadré par un masque, étant décapé et traité par voie microgalvanique
caractérisé
en ce qu'il consiste à effectuer une réparation pour des surfaces endommagées inférieures à 14 mm² et à placer le masque utilisé autour du point endommagé, de façon à ce qu'il y ait tout autour un chevauchement de pas plus de 0,5 mm, le point endommagé étant cuivré par voie microgalvanique, à nouveau décapé et ensuite cobalté par voie microgalvanique.

8. Procédé suivant l'une des revendications 1 à 7, caractérisé en ce qu'il est utilisé pour le décapage de l'acide sulfurique ou de l'acide sulfurique avec de l'eau oxygénée ou de l'hydrogénofluorure de sodium ou de l'hydroxyde de potassium.

9. Procédé suivant l'une des revendications 1 à 8, caractérisé en ce que pour le cuivrage galvanique, le nickelage et le cobaltage, on utilise des solutions contenant les ions métalliques correspondants.

10. Dispositif de microgalvanisation pour la mise en oeuvre du procédé suivant l'une des revendications 1 à 9, caractérisé par un redresseur de courant dont on peut inverser les pôles, par une électrode ayant une pointe qui peut plonger dans la solution de décapage ou dans la solution galvanique et une borne de raccordement de pôle opposé à relier à la tôle d'acier, ainsi que par un masque pour encadrer le point endommagé avec un chevauchement de 0,5 mm.

11. Dispositif de microgalvanisation suivant la revendication 10,
caractérisé en ce que l'électrode est en platine/iridium.
